# EUROPEAN PATENT APPLICATION

(11) **EP 4 691 924 A1**
(43) Date of publication of application: **11.02.2026**
(21) Application number: 25770222.5
(22) Date of filing: 12.05.2025
(51) Int. Cl.: B65B 51/10

(54) **THERMAL BONDING METHOD FOR PLASTIC BAG AND METHOD FOR PRODUCING PLASTIC BAG**

(30) Priority: 27.06.2024 JP 2024103604
(71) Applicant: Hishinuma, Kazuo, Kawasaki-shi, Kanagawa 212-0054 (JP)
(72) Inventor: Hishinuma, Kazuo, Kawasaki-shi, Kanagawa 212-0054 (JP)
(74) Representative: Kraus & Lederer PartGmbB
(86) International application number: PCT/JP2025/017250
(87) International publication number: WO 2026/004368

(57) **Abstract**

Provided is a thermal bonding method for a plastic bag, comprising: heat-sealing a heat sealing material interposed between a pair of heating bodies, wherein one of the pair of heating bodies has a microscopic linear protrusion having a semi-circular or trapezoidal sectional shape, and wherein the heated linear protrusion is pressed against a sealant of the heat sealing material to inject the sealant that has been melted at a temperature within a temperature zone for cohesive adhesion in a strip-like shape along a side edge of the linear protrusion so as to form a mold adhesion strip.

## Description

### Technical Field

The present invention relates to a thermal bonding method for a plastic bag and a method of manufacturing a plastic bag.

More particularly, the present invention relates to a thermal bonding method for a plastic bag and a method of manufacturing a plastic bag, which enable simultaneous achievement of prevention of bag rupture, hermetic sealing, and adhesive strength asymptotically approaching a breaking force of a material.

### Background Art

For a bag/container and packaging (flexible packaging) using a film or sheet material of plastic, bag making and a hermetically sealing operation after filling of contents are achieved by thermal bonding (hereinafter also referred to as "heat sealing") for pressing heat-generating metal bodies against bonding outer surfaces or using internal heat generation in a material, which is caused by an electromagnetic wave or an ultrasonic wave.

As a result of continuous advancement in technology of thermal bonding through the intensive research conducted by the present inventor over many years (see, for example, Patent Literatures 1 to 4), expectations in thermal bonding are summarized into the following two points.
(1) Simultaneous achievement of "hermetic sealing" and "easy opening" without causing edge break on an inner side of a thermally bonded surface.
(2) Acquisition of adhesive strength asymptotically approaching breaking strength of a material without causing edge break.

### (Basic Operation of Heat Sealing Technique)

A plastic film or sheet material is used for a flexible packaging article.

A thermal bonding (heat sealing) technique using thermoflexibility of plastic materials is used to make bags or hermetically seal packaging articles after filling.

The heat sealing technique involves thermal bonding achieved by pressure bonding heat-generating bodies (heat bars) onto outer surfaces of a plastic material to heat bonding surfaces through thermal conduction or by causing heat generation in the vicinity of the bonding surfaces by using internal heat generation in a material caused by an electromagnetic wave or an ultrasonic wave.

The "plastic material" herein means a composite material in which a surface layer material and a sealant are bonded to each other (laminated).

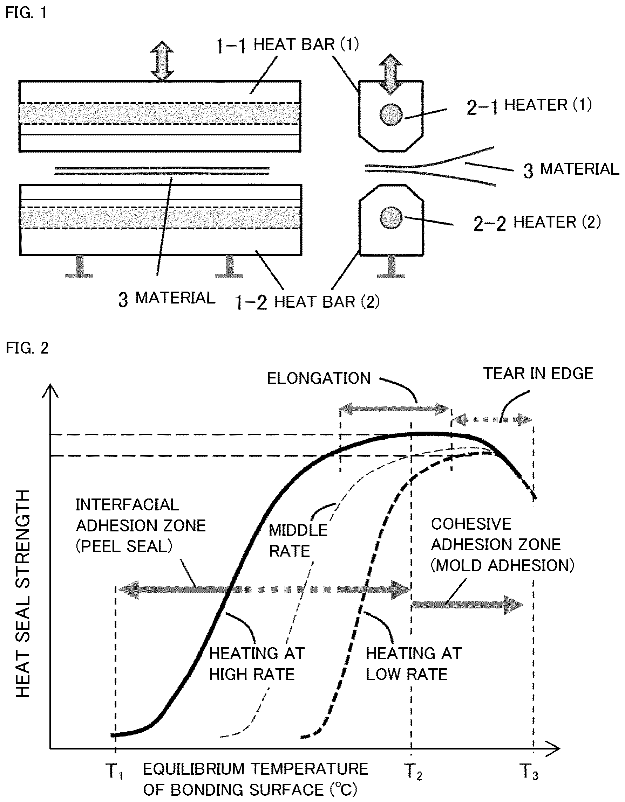

In FIG. 1, there is illustrated a heat jaw system including a pair of heat bars 1-1, 1-2. The heat jaw system generates heat using heaters 2-1, 2-2, and pressure-bonds and heats outer surfaces of a material 3. An automatic heat jaw system is characterized in performing batch operations several tens of times per minute and a goal is achieved within operation time as short as only 0.5 second to 1.0 second.

### Citation List

### Patent Literature

[PTL 1] JP 2007-313782 A
[PTL 2] JP 2016-43988 A
[PTL 3] JP 2017-114018 A
[PTL 4] JP 2021-014039 A

### Summary of Invention

### Technical Problem

### (Description of Heat Seal Strength)

A major parameter for the completion of a heat seal is a bonding surface temperature.

Thermal adhesive strength (heat seal strength) of heated samples using a controlled bonding surface temperature as a parameter includes a group of measurements of tensile tests in which both ends of each sample having a width of 15 mm obtained by cutting are nipped.

FIG. 2 is a graph that is plotted with the horizontal axis representing a fused surface temperature and the vertical axis representing tensile strength (N/15 mm).

The heat seal strength changes depending on a heating rate. Thus, for the heating rate, three typical examples, that is, a high rate, a medium rate, and a low rate are shown as models in FIG. 2.

### (Description of Completion of Heat Sealed Area)

For the completion of a heat sealed area, close contact achieved in nanometer order is required. Close contact of a nanometer-order microscopic irregular surface of a material can be achieved by pressure-bonding the material that has been softened by heating. In ASTM F2029:2000 (only one official standard in the world, which use a heating temperature in heat sealing techniques as a parameter), setting a pressure-bonding pressure on a heated surface to 0.1 MPa to 0.4 MPa is specified.

### (Description of Accomplishment of Bonding State of Heat Sealed Area)

When the same heating rate is maintained throughout the examination of a single heated sample, the influence of the heating rate can be disregarded for discussion. Heat seal strength starts rising in interfacial adhesion in which separation occurs in a bonding surface and increases progressively. When reaching a melted state, the bonding surface is brought into a cohesive adhesion state in the form of mold. Tensile test strength under this state asymptotically approaches breaking strength of a packaging material.

Bonding in an interfacial adhesion zone uses separation energy of the bonding surface to achieve easy opening and resistance to bag rupture at the same time. Thus, the heat seal strength is 0.5 N/15 mm to 10 N/15 mm, which is far smaller than the breaking strength of the packaging material. In practice, in order to use a function of the separation energy, a peel seal with a bonding surface having a width of at least 5 mm is required.

Today, for an actually expected function of the interfacial adhesion state, problems have been solved by applying technologies described in Patent Literatures 1 to 4. In the cohesive adhesion, separation of the bonding surface does not occur, and hence the separation energy cannot be utilized. Thus, elongation energy of the material is used for bag rupture energy.

### (Actual Thermal Bonding Characteristics of Retort Pouch Material)

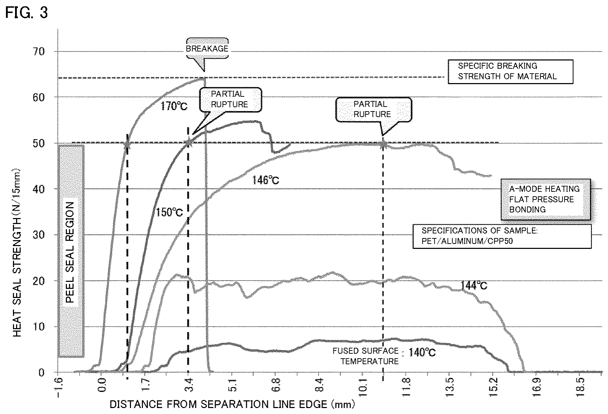

In FIG. 3, an example of analog outputs in tensile tests on samples (retort pouch materials) heated by typical flat pressure bonding is shown. In order to improve a gas barrier property, the retort pouches each include an aluminum foil having high thermal conductivity inserted into a surface layer material. This aluminum foil allows a heat flow from heat bars to flow out of a system. Thus, even with uniform heating, a heat sealed area shows a characteristic in a temperature distribution in which a central portion has the highest temperature.
(1) With heating at 146°C, the heat sealed area includes a mixture of interfacial adhesion (peel seal) and cohesive adhesion. This heating allows acquisition of the highest heat seal strength for preventing occurrence of edge break.
(2) At 145°C and below, the entire surface is in a peel seal state. Thus, edge break of a heat seal does not occur.
(3) In a high-temperature adhesion zone at 150°C or higher, the entire surface is in a melted state and a cohesive adhesion state. Thus, a firmly bonding state is achieved. However, a poly-ball of a sealant, which is a non-uniform overflow, is formed over a heat seal edge. When the poly-ball is formed in a projecting shape on the edge, a bag rupture force acts as a concentrated load onto the top. Thus, a pinhole is easily formed even under a low bag rupture force, leading to bag rupture originating therefrom. At this point, a heat seal width in a cohesive adhesion zone no longer contributes to resistance to breakage.

In Table 1, a relationship (force for generating a pinhole in an irregular heat seal edge) between a poly-ball on the heat seal edge and a bag rupture force is shown.

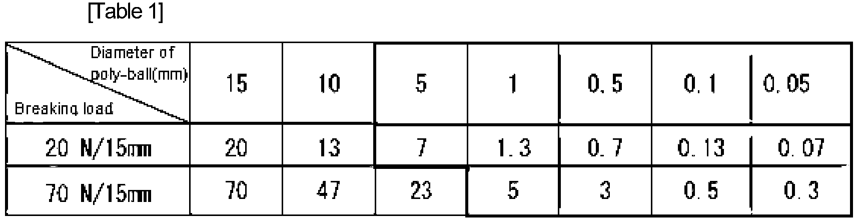

In Table 1, it is shown that a pinhole is easily generated under several N of a locally applied load even in a bonding surface having a breaking load of 20 N/15 mm to 70 N/15 mm, leading to fracture originating from the pinhole.

In a case of the cohesive adhesion (20 N/15 mm), even when a projection width (dimension of the poly-ball) is 5 mm, the poly-ball can be a bag rupture load of 7 N/15 mm.

In a case of 70 N/15 mm, when the dimension of the poly-ball is 1 mm, a pin hole is easily generated with a bag rupture load of 5 N/15 mm.

### (Actual Measurement of Separation Energy)

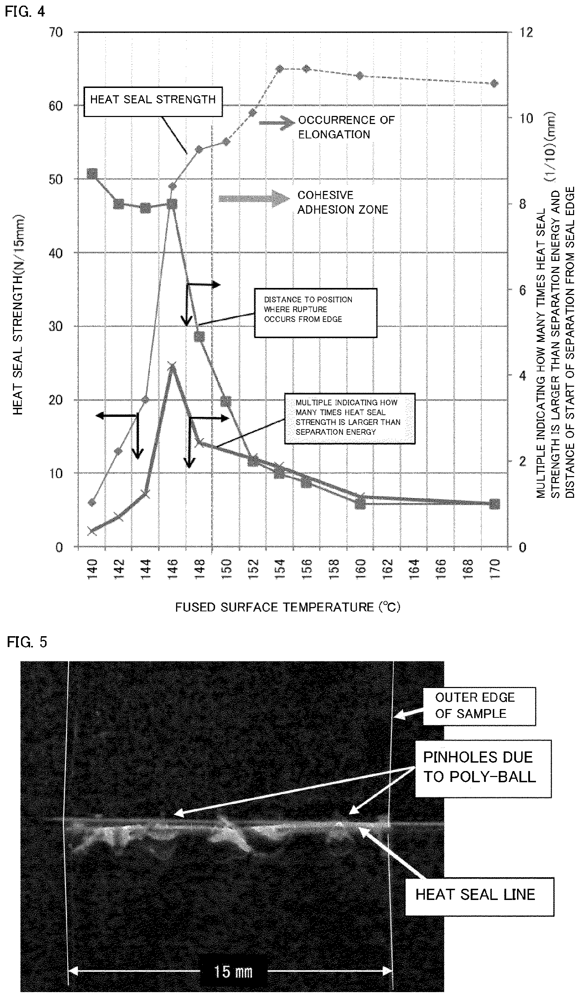

In FIG. 3, there is shown an example of tensile test pattems of heat seal samples (retort pouch materials) heated at different temperatures. Further, in FIG. 4, there is shown an example of an evaluation test for resistance to breakage of the heat seal samples (retort pouch materials), which is the result of calculation of resistance to bag rupture in the interfacial adhesion zone, which is analyzed by a separation energy theory based on the data shown in FIG. 3 and uses a heating temperature as a parameter.

For the separation energy, a measurement value at a separation point in the tensile test at each temperature is converted based on 1/15=1 mm to obtain separation energy (mJ) at each point. A range of validation is integrated to thereby create a graph.
(1) For the samples of cohesive adhesion, a tensile distance to a rupture point is integrated.
(2) For the samples of interfacial adhesion, an integrated value up to a partial rupture point (11 mm) at 146°C is collected.
(3) An integrated value up to a rupture point at 170°C is defined as 1, and other results of computation are each indicated as a "multiple indicating how many times heat seal strength is larger than separation energy". For heating at 146°C, resistance to bag rupture that is about four times larger than that at 170°C at which there is a risk of edge break is exhibited.

For a separation start point from an edge of a heated surface, separation starts at about 0.8 mm at 146°C.

In a case of heating at 170°C, separation starts at (-0.5 mm) under the influence of residual heat and reaches a yield point at about 1 mm.

For reference, data of heat seal strength, which serves as an index in typical heat seal control, is also shown.

It is understood that, based on the separation energy theory, "heat seal strength", which is used to evaluate heat sealing characteristics, has a problem in its eligibility.

In FIG. 5, there is shown an example of a sample in which a tensile test on biaxially oriented polypropylene (OPP)/linear low-density polyethylene (LLDPE) was interrupted and edge break occurred. A heat seal line was defined. It is understood that pinholes/breakage originating from a heat seal edge occurred at a plurality of points.

The present inventor has attempted to establish a thermal bonding method that allows the prevention of generation of pinholes in the use of adhesive strength around specific breakage strength of a plastic material. Specifically, this corresponds to achievement of appropriate cohesive adhesion control around a melting temperature (Tm) by suppressing overflow of a melted sealant from the bonding surface to the edge as a poly-ball.

### (Analysis of Mechanism of Bag Rupture)

Causes of breakage of the composite material can be classified into the following conditions.
(1) The entire composite material breaks at a time.
(2) Due to adhesive strength (lamination strength) between the sealant and the surface layer material.
(3) Due to a difference between elongation strength and breaking strength of each of the materials of a structure.
   1) (delamination strength)<(elongation strength of sealant)<(elongation strength of surface layer material)
      → Elongation of the sealant and occurrence of delamination
   2) (elongation strength of sealant)>(elongation strength of surface layer material)>(delamination strength)
      → Elongation of the surface layer material and occurrence of delamination
(4) After (3)-1), the relationship changes to: elongation strength of sealant>elongation strength of surface layer material
   →Breakage of surface layer material → Elongation breakage of the sealant → End
(5) After (3)-2), the relationship changes to: elongation strength of sealant<elongation strength of surface layer material
   → Elongation breakage of the sealant → End

In practice, most of the cases correspond to the conditions (4) and (5). Thus, for bag rupture resistance performance of the composite material, two breaking strengths, that is, (i) breaking strength of the surface layer material and (ii) elongation breaking strength of the sealant are to be evaluated.

The condition (4) relates to the loss of barrier performance of the surface layer material, and the condition (5) relates to the prevention of leakage of contents.

### (Method of Controlling Bag Rupture)

A bag rupture force that damages a thermally bonded (heat seal) edge is generated due to a static stacking compressive force, dynamic impact, and vibration during physical distribution and storage.

The static compressive stress is defined as: static (compressive stress)=(separation force)×(separation length). Thus, it is only required that preparation be made so as to satisfy a relationship: (bag rupture force)<(compressive stress).

In a case of a quadrangular bag, the bag rupture force starts at a point of tangency of an inscribed circle, and a separation line extends/develops in an arc-like manner.

In a case of a static load such as compression, a relationship starts as [(separation force)=(heat seal strength)×separation length]<(bag rupture force) is satisfied. Then, when separation of the heat sealed area proceeds and the forces in the above-mentioned relationship become equal to each other, the separation stops.

As a subsequent load, when a bag rupture force is smaller than that under the above-mentioned condition, the separation does not proceed.

The resistance to bag rupture can be controlled by selection of the heat seal strength and a heat seal width.

However, drop impact and vibration during transport act locally on the heat seal edge in a pulse-like manner. A plurality of impacts act individually each time. Thus, the use of the resistance to bag rupture due to the expansion of a separated surface is limited. A current regulation JIS Z 0238:1968 (Testing method for heat sealed flexible packages and semi-rigid containers) regulates resistance to bag rupture on the assumption of absorption of two impact loads. Thus, the resistance is required to be more improved. The development of dynamic resistance to bag rupture based on cohesive adhesion (mold adhesion) using specific breaking strength and elongation of a material is expected.

One object of the present invention is to provide a thermal bonding method for a plastic bag and a method of manufacturing a plastic bag, which enable the simultaneous achievement of prevention of bag rupture, hermetic sealing, and adhesive strength asymptotically approaching a breaking force of a material.

### (Definition of Common Denotation in the Present Invention)

Hereinafter, adhesion achieved according to the present invention may also be commonly denoted to as "mold adhesion".

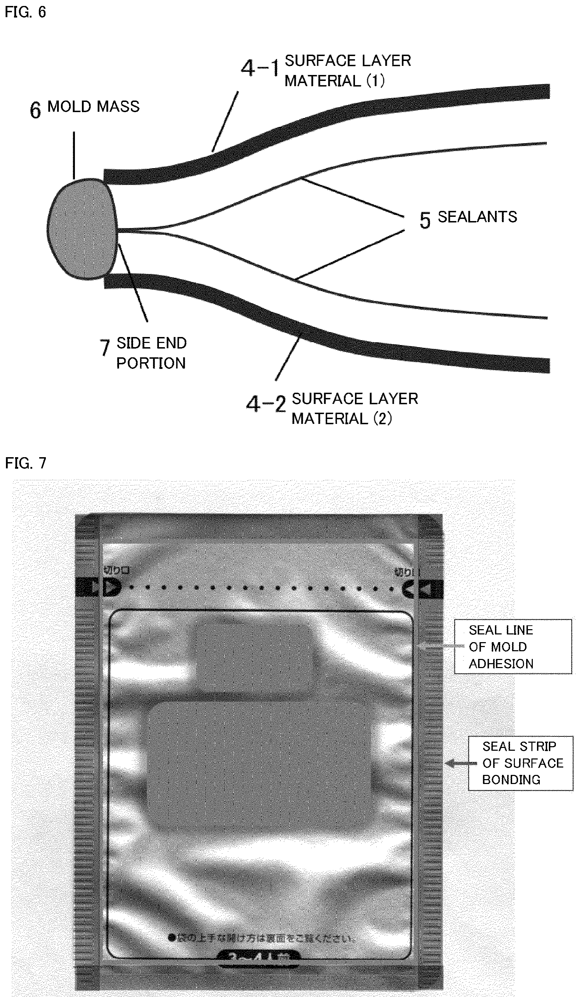

In a thermal bonding operation in a cohesive adhesion zone for a plastic material, it is desired to establish the following measures that use the heat seal strength asymptotically approaching the specific breaking strength of the material and an elongation characteristic of the material while preventing edge break.
(1) Failure conditions in a related-art surface pressure bonding/heating method, under which a poly-ball is generated over a heat seal edge, are clarified.
(2) An end side surface of a bag is locally brought into a mold state (see FIG. 6).
(3) The measures are taken in filling and sealing step in packaging and a bag making step.
(4) A surface layer material is simulated as a microscopic pressure container and is used as an injection device.
(5) A pressure-bonding portion of a heat bar is formed into a microscopic semi-circular or trapezoidal linear shape to be used as a microscopic injection pump.
(6) A reduction in heat seal fin width is achieved (see FIG. 7).
(7) A direct method for reducing the amount of use of plastic materials, which is demanded in SDGs, is presented. A pouch size in FIG. 7 is: (115 mm×150 mm=17,250 mm²). When the heat seal width is reduced by 9 mm by introducing the "mold adhesion", a reduced area is: (140 mm×9 mm×2)+(105 mm×9 mm×2)=4,410 mm². A saving rate is: (4,410/17,250)=26%.

The problem of the present invention can be coped with in the filling and sealing step in packaging and the bag making step.
(1) Outer edge side end portions 7 of sealants are finished in a mold state 6 (see FIG. 6).
(2) The sealants are locally heated, and a trace amount of melted sealants is injected onto a portion corresponding to an outer edge side surface of a bag. In this manner, a novel structure that prevents formation of a poly-ball on a joint surface of the sealants is achieved.

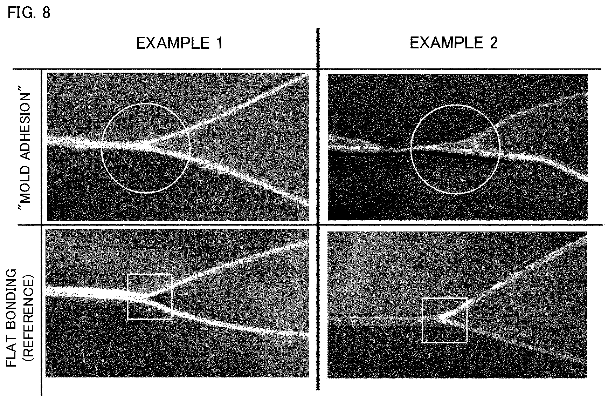

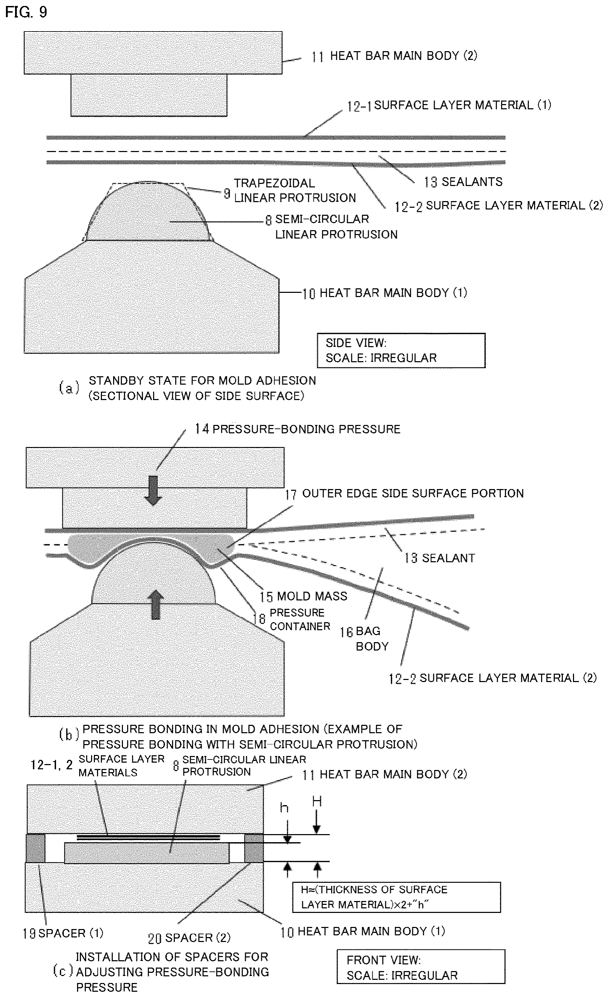

An example of a method of solving the problem of the present invention is described below.
(1) A microscopic elongated protrusion having a semi-circular shape 8 or a trapezoidal shape 9 is formed on a heating/pressure-bonding surface of a heat bar (see FIGs. 9).
(2) An outer edge side surface portion 17 of the sealants is heated to around a melting temperature (Tm).
(3) A pressure-bonding pressure 14 on the semi-circular or trapezoidal protrusion is adjusted so that the melted sealants on the microscopic portion flow and the surface layer materials are brought into contact with each other. In order to suppress excessive pressurization, spacers 19, 20 are installed at both ends of the heat bars so as to automatically adjust a compression dimension to be close to a dimension corresponding to two surface layer materials.
(4) The surface layer materials around a heated region are used as a pressure container 18.
(5) A mold mass 15 inside the pressure container 18, which has been melted by heating/pressure bonding with the microscopic semi-circular or trapezoidal protrusion, is injected onto the outer edge side surface portion 17 of a lightly heated portion to thereby bring a side surface of a bag body into a "mold adhesion" state.
(6) The amount of injection is optimally adjusted by changing a dimension of the semi-circular or trapezoidal protrusion.
(7) A heat seal fin can be formed about twice as wide as a dimension of a bottom side of a semi-circular or trapezoidal shape depending on a thickness of the sealant used, and thus is required to be only 2 mm to 3 mm (see FIG. 7).
(8) Microphotographs of cross sections of Examples using semi-circular elongated protrusions (1 mm and 3 mm) are shown in FIG. 8.

For comparison, images of flat pressure-bonding are supplementarily shown. It is understood that an intended mold mass was generated even with thin sealants of OPP/LLDPE (thickness of 20 µm).

A sealant of a retort pouch material is as thick as 50 µm. A mold mass that was generated when an elongated protrusion of 3 mm was selected was sufficient. It is understood that an intended effect was obtained even when the dimension of the elongated protrusion was 1 mm.

Fragility of the heat seal edge of the sample for the flat pressure bonding in the cohesive adhesion was confirmed.

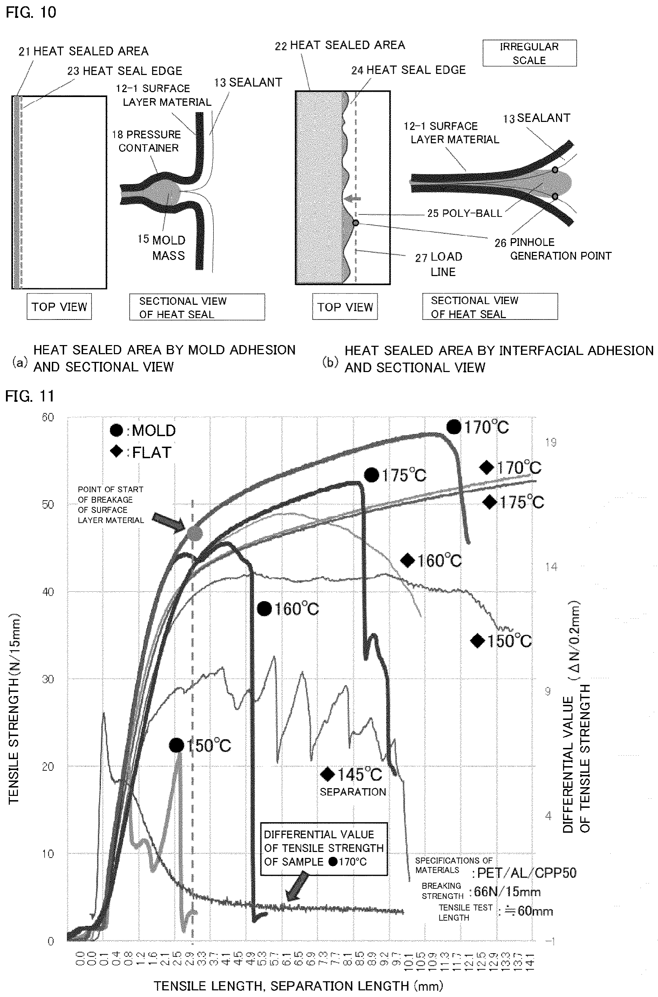

(9) Features of the "mold adhesion" of the present invention and the flat pressure bonding according to the related-art method are illustrated in FIGs. 10.
1) A heat seal width according to the flat pressure bonding method is 10 mm to 15 mm. When pressure bonding at a high pressure is performed under a state in which the entire surface is melted, a large amount of sealants now in a paste state non-uniformly flows over a heat seal edge to form a poly-ball. When a flat pressure bonding width is set to 10 mm for comparison of a thermally bonded area, the thermally bonded area is about ten times larger (see FIG. 10(b)).
2) Fusion 26 of a poly-ball 25 that flows over the edge onto surfaces of sealants 13 occurs. A bag rupture force acts and a pinhole is generated at an intersecting point of a load line 27 and the poly-ball, leading to fracture.
3) Pinhole generation stress under this state is as shown in Table 1. Even robust sealants 13 break at several N.
4) In the flat pressure bonding, a large amount of melted sealants is generated. The suppression of the generation of melted sealants is means for solving the problem.
5) In the present invention, as illustrated in FIGs. 9, heating and compression are performed with a microscopic semi-circular or trapezoidal protrusion of preferably about 1 mm to thereby control the amount of generation of melted sealants.

According to the present invention, the following thermal bonding method for a plastic bag as described below can be provided.
1. A thermal bonding method for a plastic bag, comprising: heat-sealing a heat sealing material interposed between a pair of heating bodies, wherein one of the pair of heating bodies has a microscopic linear protrusion having a semi-circular or trapezoidal sectional shape, and wherein the heated linear protrusion is pressed against a sealant of the heat sealing material to inject the sealant that has been melted at a temperature within a temperature zone for cohesive adhesion in a strip-like shape along a side edge of the linear protrusion so as to form a mold adhesion strip.
2. The thermal bonding method for a plastic bag according to the item 1, wherein the heat sealing material is a composite material including a surface layer material and the sealant, and wherein the surface layer material of the composite material is used as a pressure container in the injection.
3. The thermal bonding method for a plastic bag according to the item 1 or 2, wherein a diameter of the semi-circular shape ranges from 0.5 mm to 3 mm, and wherein a length of a bottom base of the trapezoidal shape ranges from 0.5 mm to 3 mm.
4. The thermal bonding method for a plastic bag according to any one of the items 1 to 3, further comprising adjusting an injection amount of the melted sealant by changing a dimension of the semi-circular shape or the trapezoidal shape.
5. A method of manufacturing a plastic bag, comprising manufacturing a plastic bag having the mold adhesion strip by using the thermal bonding method for a plastic bag of any one of the items 1 to 4.

According to the present invention, it is possible to provide a thermal bonding method for a plastic bag and a method of manufacturing a plastic bag, which enable the simultaneous achievement of prevention of bag rupture, hermetic sealing, and adhesive strength asymptotically approaching a breaking force of a material.

### Brief Description of Drawings

FIG. 1 is a view for illustrating an execution model (heat jaw system) of thermal bonding (heat seal).
FIG. 2 is a graph for showing a model of emergence of heat seal strength.
FIG. 3 is a graph for showing tensile test pattems of heat seal samples heated at different temperatures (example; retort pouches).
FIG. 4 is a graph for showing an evaluation test for resistance to breakage of the heat seal samples (example; retort pouches).
FIG. 5 is a photographic image for showing an example of bag rupture due to a poly-ball of OPP/LLDPE.
FIG. 6 is a view for illustrating a model of "mold adhesion".
FIG. 7 is a photographic image for showing a difference between a heat sealed area through "mold adhesion" and a heat sealed area through flat bonding.
FIG. 8 is a set of microphotographs (examples) of sections of pressure bonding of heat seal samples through cohesive adhesion.
FIGs. 9 are views for illustrating an actual model of "mold adhesion".
FIGs. 10 are views for comparatively illustrating features in tensile tests for "mold adhesion" and flat pressure bonding.
FIG. 11 is a graph for showing a tensile test pattern of the "mold adhesion" of retort pouches.
FIG. 12 is a graph for showing a differential computation of a "mold adhesion" pattern of a retort pouch.
FIG. 13 is a photographic image for showing breakage occurring in a tensile test for "mold adhesion" of a retort pouch material.
FIG. 14 is a graph for showing application of "mold adhesion" to an OPP/LLDPE film.

### Description of Embodiments

Now, a thermal bonding method for a plastic bag and a method of manufacturing a plastic bag of the present invention are described in detail below.

The expression ""x" to "y"" as used herein represents the numerical range of "from "x" or more to "y" or less." An upper limit value and a lower limit value described for the numerical range may be arbitrarily combined.

In addition, two or more embodiments that are not contrary to each other out of the individual embodiments of an aspect according to the present invention to be described below may be combined, and an embodiment in which the two or more embodiments are combined is also an embodiment of the aspect according to the present invention.

A thermal bonding method for a plastic bag according to an aspect of the present invention is a thermal bonding method for a plastic bag, comprising:
heat-sealing a heat sealing material interposed between a pair of heating bodies,
wherein one of the pair of heating bodies has a microscopic linear protrusion having a semi-circular or trapezoidal sectional shape, and
wherein the heated linear protrusion is pressed against a sealant of the heat sealing material to inject the sealant that has been melted at a temperature within a temperature zone for cohesive adhesion in a strip-like shape along a side edge of the linear protrusion so as to form a mold adhesion strip.

According to this aspect, the simultaneous achievement of prevention of bag rupture, hermetic sealing, and adhesive strength asymptotically approaching a breaking force of a material is enabled.

According to this aspect, the following effects are particularly obtained.
(1) An appropriate heat sealing method for cohesive adhesion (mold adhesion) with strength asymptotically approaching breaking strength of a plastic material can be completed, thereby ensuring strong resistance to bag rupture.
(2) A specific reduction in the amount of use of plastic materials, which is required in SDGs, can be achieved.

With reference to FIGs. 9, one embodiment according to this aspect is described. FIGs. 9 are explanatory views of an actual model of "mold adhesion". In FIGs. 9, FIG. 9(a) is a side sectional view for illustrating a standby state for mold adhesion, FIG. 9(b) is a side sectional view for illustrating mold adhesion at the time of pressure bonding (example of pressure bonding with a semi-circular protrusion), and FIG. 9(c) is a front view for illustrating installation of spacers for adjusting a pressure-bonding pressure.

One embodiment according to this aspect can be carried out in accordance with the following items (1) to (7).
(1) A microscopic elongated protrusion having a semi-circular shape 8 or a trapezoidal shape 9 is formed on a heating/pressure-bonding surface of a heat bar (FIG. 9(a)). In FIG. 9(a), a cross section of the microscopic elongated protrusion having the semi-circular shape 8 is indicated by a solid line, and a cross section of the microscopic elongated protrusion having the trapezoidal shape 9 is indicated by a broken line.

A heat sealing device used in this embodiment includes a pair of heating bodies arranged so as to be opposed to each other.

Here, one of the heating bodies includes a heat bar main body 10 and a microscopic elongated protrusion having the semi-circular shape 8 or the trapezoidal shape 9 formed on a surface of the heat bar main body 10, which is closer to another one of the heating bodies. The microscopic elongated protrusion is formed in a longitudinal direction of the heat bar main body 10. The microscopic elongated protrusion can be formed by performing micro-processing on a front side of a generally used heat bar made of metal such as brass, copper, aluminum, or stainless steel.

Further, the another heating body is formed of a heat bar main body 11. A surface of the heat bar main body 11 on one heating body side is formed with a larger width than that of the microscopic elongated protrusion. As a material of a member that forms a contact surface of the heat bar main body 11 with a heat sealing material (surface layer materials 12-1, 12-2 and sealants 13), for example, a resin or the like can be used. As the resin, a resin that does not soften even at a heating temperature during heat sealing can be suitably used. For example, a fluororesin (for example, polytetrafluoroethylene), a polyimide resin, or the like may be used. Specific examples of such resin include, for example, Teflon and Kapton (both registered trademarks of DuPont de Nemours, Inc.). Further, the member that forms the contact surface is not necessarily required to be an elastic body described in Patent Literature 2 (for example, an elastic body having Shore hardness of from 40A to 90A, such as a silicone rubber or a fluoro rubber).

Here, the heat sealing material arranged between the pair of heating bodies includes two composite materials. Each composite material is a laminate body including a surface layer material and a sealant. Two composite materials are arranged in a state in which the sealants are opposed to each other.

In one composite material, a thickness of the surface layer material can be appropriately set, and is, for example, from 10 µm to 3,000 µm, preferably from 20 µm to 2,000 µm. The surface layer material may be a single layer or a laminate body including two or more layers. The surface layer material can also be referred to as a layer in the composite material other than the sealant and as a "base material layer".

In one composite material, a thickness of the sealant can be appropriately set, and is, for example, from 10 µm to 3,000 µm, preferably from 20 µm to 2,000 µm.

At least one of the pair of heating bodies that have been heated is moved so that the heat sealing material (the surface layer materials 12-1, 12-2 and the sealants 13) is interposed between the pair of heating bodies. In this manner, the heated microscopic elongated protrusion can be pressed against the sealants of the heat sealing material. At this time, the melted sealants are injected into a strip-like shape along a side edge of the microscopic elongated protrusion to thereby form a mold adhesion strip formed of a mold mass 15 (FIG. 9(b)). More specifically, the formation of the mold adhesion strip is as described below.

(2) An outer edge side surface portion 17 of the sealants is heated to around a melting temperature (Tm).

The mold mass 15 formed by the microscopic elongated protrusion 8 is generated on each of a bag side (inside of a bag) and an outer edge side of the bag. In this aspect, the mold mass formed on the bag side can be used.

The "outer edge side surface portion 17 of the sealants" is a boundary portion between a bonded portion and a non-bonded portion of the sealants 13 on the surface layer materials 12-1, 12-2 inside of the bag and is a portion of the mold mass 15 formed on the bag side, which is positioned inside of the bag.

It is preferred that the outer edge side surface portion 17 of the sealants be heated to a temperature around the melting temperature (Tm) of the sealants, for example, within a range of Tm±5°C to 10°C, preferably from Tm to Tm+10°C, more preferably from Tm to Tm+5°C.

(3) A pressure-bonding pressure 14 on the semi-circular or trapezoidal protrusion is adjusted so that the melted sealants of a micro-processed portion (portion compressed by the microscopic elongated protrusion) flow and the surface layer materials are brought into contact with each other.

At this time, in order to automatically suppress excessive pressurization, it is preferred that spacers 19, 20 be provided at both ends of the heat bars (between the heat bar main bodies 10, 11) to satisfy the following condition (i) or (ii) (see FIG. 9(c)).
Condition (i): Height H [mm] of the spacers≈(thickness [mm] of one surface layer material)×2+(height "h" [mm] of the elongated protrusion)
Condition (ii): Height H [mm] of the spacers×α=(thickness [mm] of one surface layer material)×2+(height "h" [mm] of the elongated protrusion)
in which α is from 0.9 to 1.1.

The adjustment of the pressure-bonding pressure 14 may be performed in addition to the embodiment in which the spacers are provided (or a distance between the pair of heating bodies when being closest to each other is adjusted) or in place of the embodiment. The pair of heating bodies can be driven by an air cylinder to perform compression so that the pressure-bonding pressure 14 is adjusted by a driving pressure of the air cylinder.

Excessive pressurization can be prevented by providing the spacers (or adjusting the distance between the pair of heating bodies when being closest to each other) or adjusting the pressure-bonding pressure 14. Here, pressurizing the heat sealing material so that a thickness of the heat sealing material becomes smaller than a total thickness of the two surface layers in the heat sealing material or the like corresponds to the "excessive pressurization".

(4) A load on the microscopic elongated protrusion is set to from 20 N/10 mm to 30 N/10 mm.

This load corresponds to 0.15 MPa to 0.2 MPa in surface pressure bonding on a surface having a width of 15 mm, and is not a significantly large operating force.

(5) The surface layer materials around a heated region are used for a pressure container 18.

That is, the heat sealing material is a composite material including the surface layer materials and the sealants, and it is preferred that the surface layer material of the composite material be used as the pressure container in injection.

(6) The sealants inside the pressure container, which have been melted by heating/pressure bonding with the microscopic elongated protrusion, are injected to the outer edge side surface portion 17 of the sealants in a lightly heated portion to thereby bring a side surface of a bag body into a "mold adhesion" state.

Here, the "lightly heated portion" is a region laterally shifted from a distal end of the microscopic elongated protrusion. The sealants in this region are heated with residual heat (preheated) by the pair of heating bodies but are heated more lightly (a temperature rise caused by heating is slower) than the sealants in a region pressed by the distal end of the microscopic elongated protrusion. Thus, cohesive adhesion does not occur, and hence a poly-ball is not formed.

The thus formed mold adhesion strip has a strip-like shape extending along the side edge of the linear protrusion (microscopic elongated protrusion), and its width (width of the strip) is, for example, from 0.5 mm to 3 mm, preferably from 1 mm to 2 mm.

(7) The amount of injection of the melted sealants is adjusted by changing a dimension of the semi-circular shape or the trapezoidal shape.

The determination of the dimension depends on a thickness of the sealant and a desired heating rate. As a range of the dimension, a range of from 0.5 mm to 3 mm, in particular, a range of from 0.25 mm to 1.5 mm is preferred.

Here, the above-mentioned dimension can be used for a diameter in a case of the semi-circular shape and for a bottom base in a case of the trapezoidal shape.

In the example of FIGs. 9, the linear protrusion having a semi-circular sectional shape has been mainly described. However, as indicated by the broken line in FIG. 9(a), the sectional shape of the linear protrusion may be the trapezoidal shape 9.

In the case of the trapezoidal shape 9, it is preferred that its top base (side defining a contact surface with the heat sealing material) be shorter than the bottom base (side closer to the heat bar main body 10). For example, when a length of the bottom base of the trapezoidal shape 9 is defined as 100%, a length of the top base is from 20% to 80%.

Each of two interior angles (base angles) at both ends of the bottom base of the trapezoidal shape 9 is preferably an acute angle, particularly preferably from 45° to 80°. The two base angles may be the same or different from each other.

The "trapezoidal shape" includes not only a trapezoid but also a trapezoid having two rounded corners at both ends of the top base.

In this aspect, it is essential to set the temperature during heat sealing within a temperature zone (also referred to as "temperature range") of cohesive adhesion. In this manner, flowability is imparted to the sealants that have been melted in the temperature zone of cohesive adhesion, injection is caused, and a mold adhesion strip is formed. As described above, the temperature zone of cohesive adhesion may be a range of temperatures around the melding temperature (Tm) of the sealants, for example, the range of Tm±5°C to 10°C, preferably from Tm to Tm+10°C, more preferably from Tm to Tm+5°C. The mold adhesion strip allows achievement of strong bonding and hermetic sealing, and thus allows highly reliable hermetic sealing even when, for example, a filling is liquid.

Meanwhile, according to the technology described in Patent Literature 2, a temperature during heat sealing is set to fall within a temperature zone of interfacial adhesion (temperature range for forming a peel seal). The object, that is, easy opening is achieved with such peel seal. In this case, a temperature zone lower than the melting temperature (Tm) of the sealants is used. Further, in this temperature zone, even when the sealants can be softened, flowability that is high enough to cause the injection is not obtained, failing to form a mold adhesion strip.

A method of manufacturing a plastic bag according to one aspect of the present invention involves manufacture of a plastic bag having a mold adhesion strip that is formed by using a thermal bonding method for a plastic bag according to one aspect of the present invention.

According to this aspect, in a plastic bag to be obtained, the simultaneous achievement of prevention of bag rupture, hermetic sealing, and adhesive strength asymptotically approaching a breaking force of a material is enabled.

### Examples

Examples of the present invention are described below, but the present invention is not limited by these Examples.

### (Example 1) Checking Injection Function of Semi-circular Elongated Protrusion (Thin Plastic Material)

By using the method illustrated in FIGs. 9, "mold adhesion" samples were produced under the following conditions.

### <Sample Material>

· Thin Plastic Material: biaxially oriented polypropylene (OPP)/low-density polyethylene (LLDPE) 20 µm, Tm of LLDPE being the sealants; from 100°C to 115°C

### <Heating and Pressure Bonding Conditions>

· Heating: heating at an equilibrium temperature, at 114°C for 1 second
· Elongated protrusion: a semi-circular cross section with a diameter of 1 mm
· Pressure-bonding pressure: 100 mm/300 N=30 N/10 mm

### (Example 2) Checking Injection Function of Semi-circular Elongated Protrusion (Retort Pouch)

By using the method illustrated in FIGs. 9, "mold adhesion" samples were produced under the following conditions.

### <Sample Material>

· Retort Pouch: polyethylene terephthalate (PET)/aluminum (AL)/cast polypropylene (CPP) 50 µm, Tm of CPP being the sealants: 170°C

### <Heating and Pressure Bonding Conditions>

· Heating: heating at an equilibrium temperature, at 170°C, 2 seconds
· Elongated protrusion: a semi-circular cross section with a diameter of 3 mm
· Pressure-bonding pressure: 100 mm/300 N=30 N/10 mm

In FIG. 8, there are shown microphotographs of Examples 1, 2 using semi-circular elongated protrusions (1 mm and 3 mm). For comparison, photographic images of flat pressure bonding (flat bonding) are also shown.

It is understood that an intended mold mass was generated with the thin sealants of OPP/LLDPE each having 20 µm. In the samples for flat pressure bonding, a reinforcing effect for a heat seal edge was not observed.

The sealants of a retort pouch were each as thick as 50 µm. The generation of a mold mass when the elongated protrusion of 3 mm was satisfactory. It is understood that an intended effect was obtained even with the elongated protrusion of 1 mm.

### (Example 3): Application of "Mold Adhesion" to Retort Pouch

Thermal bonding of retort pouches is a target to be regulated based on Hazard Analysis and Critical Control Points (HACCP) and is required to be dealt with at the highest level among operations in heat sealing techniques.

A composition of materials was PET/AL/CPP at 50 µm, and Tm was 170°C.

With the application of the method illustrated in FIGs. 9, "mold adhesion" samples were produced under the following conditions.

Further, for reference, a sample formed by a related-art method of "flat pressure bonding" without using an elongated protrusion was also produced.

### <Heating Conditions>

· Heating: heating at an equilibrium temperature: at the respective temperatures shown in FIG. 11, 2 seconds
· Elongated protrusion: a semi-circular cross section with a diameter of 1 mm
· Specific breaking strength of material; 66 N/15 mm

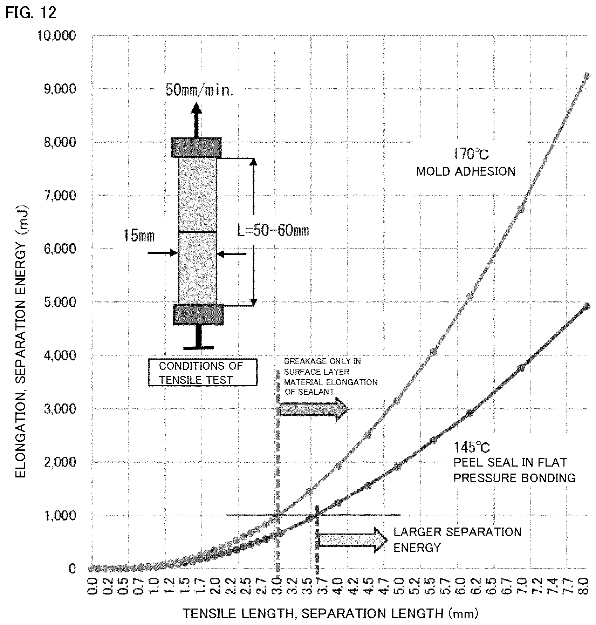

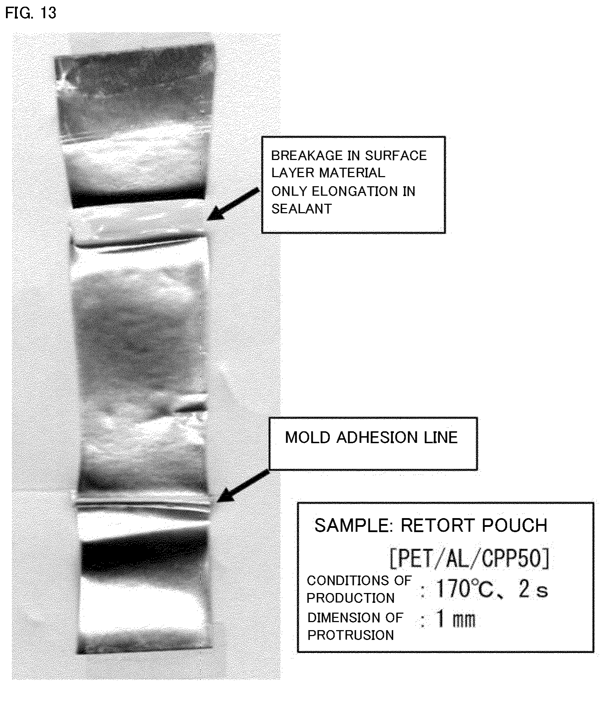

In FIG. 11, the results of measurement of tensile test pattems by the related-art method of "flat pressure bonding" and the "mold adhesion" method of the present invention are shown. In FIG. 12, the results of computations of differential values of tensile test data are shown. In FIG. 13, a broken state of the surface layer material in the tensile test is shown.

Features depending on the heating temperatures, which are obtained from the graph of FIG. 11, are listed as follows.
· ◆ 145°C: a response of interfacial adhesion (peel seal) to a tensile test. Adhesive strength of 20 N/15 mm to 30 N/15 mm is shown and is not uniform.
·• 150°C: A bonding width is 2 mm. The "mold adhesion" is performed. However, interfacial adhesion and cohesive adhesion are present at the same time. Thus, breakage occurs at a tensile length of 2.7 mm.
·• 160°C to 175°C: an adhesion state in a target range of "mold adhesion" is indicated. A response to a tensile load is a combination of elongation of the material itself and breakage of the surface layer material. A bag rupture mechanism corresponds to the item (4) defined in "(Bag Rupture Mechanism Analysis)" described above.

### (Analysis of Features of Test Results)

*The result indicated by the line ◆145°C is a separation pattern of the flat pressure bonding. The entire surface is in a peel seal state.
*The lines •150°C and •160°C of the "mold adhesion" indicate that the "mold adhesion" is incomplete and a bonded portion easily breaks under a separation force. Thus, no effect of the "mold adhesion" is observed.
*The lines +160°C to ◆175°C of the flat pressure bonding have a feature in that tensile test pattems comparable to those of the "mold adhesion" appear. However, a heat seal edge is finished in a projecting shape, and the occurrence of pinholes is observed.
*A feature of the lines •170°C and •175°C of the "mold adhesion" lies in that the tensile test pattern smoothly rises. The lines •170°C and •175°C of the "mold adhesion" indicate that breaking strength of a heat seal edge is increased. A sudden change in tensile strength occurs when the sealant breaks. Thus, the results as expected are observed. The temperature of 175°C exceeds 170°C, which is Tm. Thus, a sign of high-temperature heat denaturation is observed.

The results of the tensile tests on the heated samples in the cohesive adhesion zone are varied. When delamination or separation occurs at a side end due to a slight deviation from a case in which a uniform load is applied to a sample with a width of 15 mm, a value becomes small in the tensile test. In this case, when no breakage occurs in a "mold adhesion" portion of the delaminated sealant, it is evaluated that an intended result has been obtained.

Characteristics of progression of the tensile test were evaluated by differentiating the tensile test pattern of the sample •170°C by a tensile length.

A breaking point of the surface layer material was identified based on visual observation and a differential value.

In the test sample, an inflection point was observed when the tensile length (initial elongation length) was [3 mm/60 mm (initial length of the sample)], and breakage of the surface layer material was observed after the elongation occurred. As shown in FIG. 13, a response after the tensile length became larger than 3 mm is an elongation characteristic of only the sealants.

Resistance to bag rupture in the interfacial adhesion is expressed by [(adhesive strength)×(separation length)].

Resistance to bag rupture in the "mold adhesion" is expressed by [(adhesive strength)×(elongation)]. The separation length can be adjusted by the heat seal width, whereas an elongation length is a specific characteristic of the material.

An integral operation of the peel seal of the sample ◆145°C and an integral operation of the "mold adhesion" pattern of the sample •170°C were compared with each other.

Heat seal strength (N/15 mm) was converted into adhesive strength (N/1 mm), and an integration was performed with a tensile length and a separation length. The results are shown in FIG. 12.

An integral value for the sample ◆145°C corresponds to a heating condition under which the highest resistance to bag rupture of the material is exhibited. The integral value for the sample •170°C of the "mold adhesion" is above the separation energy of the sample ◆145°C over the entire region.

Based on the results of analysis shown in FIG. 11, rupture occurred after the surface layer material elongated by about 3 mm. The sealants did not cause bag rupture. However, a gas barrier property was impaired due to the breakage of the surface layer material, resulting in a risk of bag rupture. The resistance to bag rupture under this condition was evaluated. Then, the resistance to bag rupture until rupture occurred in the surface layer material corresponds to 3.7 mm of the peel seal. Thus, superiority of the "mold adhesion" was confirmed.

### (Example 4): Checking Application of "Mold Adhesion" to OPP/LLDPE film

This sample (specific breaking strength of the material: 48 N/15 mm) is a general-purpose material that is the most common in the market. The sealant was as thin as 20 µm. A test for checking suitability of the "mold adhesion" for this thin material was conducted.

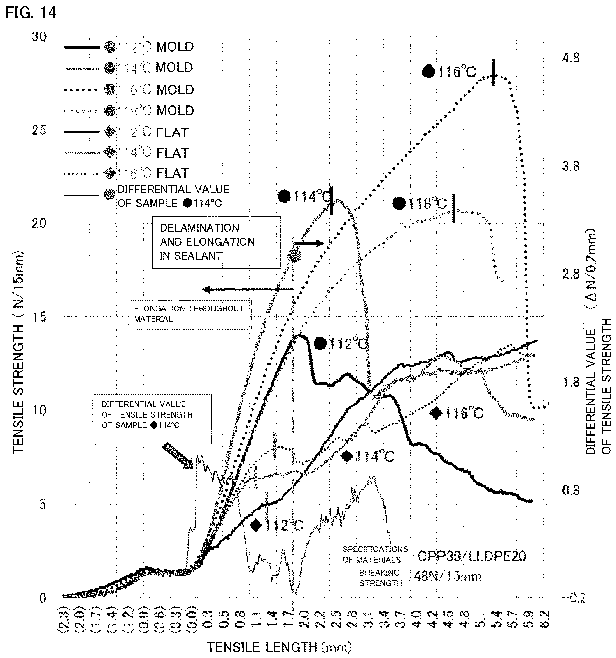

Samples were produced by the method illustrated in FIGs. 9 under the following conditions, and a tensile test was conducted for the flat pressure bonding by the related-art method and the "mold adhesion" by the present method. The results are shown in FIG. 14.

### <Heating Conditions>

· Heating: heating at an equilibrium temperature: at the respective temperatures shown in FIG. 14
· Heating time; 1 second
· Elongated protrusion; a semi-circular cross section with a diameter of 1 mm

### (Analysis of Features of Test Results)

(1) A sample ◆112°C of the flat pressure bonding was in a surface adhesive state. A tensile test pattern exhibited a separation characteristic.
(2) Samples ◆114°C and higher of the flat pressure bonding were in the cohesive adhesion zone. Tensile test pattems were disturbed, and edge break occurred frequently. This condition is described with reference to FIGs. 10, and an example thereof is shown in FIG. 5.
(3) The edge break was prevented also in a sample •112°C of the "mold adhesion".
(4) In samples •114°C and •116°C, heat seal strength of 21 N/15 mm was acquired, and the "mold adhesion" was reliably achieved.
(5) In a sample •118°C, the effect of excessive heating was observed.
(6) When a response of the sample •114°C was differentiated, an inflection point was observed at a tensile distance within a range of from 1.7 mm to 2.0 mm.
   It is understood that, when the tensile distance became longer than the above-mentioned tensile distance, the sealants started breaking and reached complete breakage at a tensile length of 2.5 mm.
(7) It is understood that a high level of bonding for hermetic sealing through the "mold adhesion" that was superior to the flat pressure bonding was possible even with the thin sealant material (20 µm).

### Industrial Applicability

Expected functions of general-purpose packaging using a plastic material are as follows.
(1) A bonding state asymptotically approaching breaking strength of a packaging material used is achieved, and the generation of pinholes in the heat seal edge or breakage is not caused by compression or impact during physical distribution.
(2) Ensured hermetic sealing is established.
(3) Consumers require easy manual opening without using a tool such as scissors.

This bonding mechanism depends on thermoflexibility of a plastic material.

A bonding surface of a plastic material transits from interfacial adhesion in which the bonding surface remains to cohesive adhesion in a mold state in which no bonding surface is left.

The achievement of both "hermetic sealing" and "easy opening" without breakage in the heat seal edge is found in the inventions of Patent Literatures 2 and 3. However, a method of controlling adhesive strength comparable to the breaking strength of the material based on an appropriate theory has not been achieved.

According to the present invention, an injection function for melted sealants is created by a microscopic thermal bonding operating portion to successfully perform the "mold adhesion" on the outer edge of the bag with the suppression of bag rupture caused by a poly-ball.

This method allows the completion of a heat sealed area even with the elongated protrusion of about 3 mm. Sustainable development goals (SDGs) set a deadline to achieve a requirement of a reduction in the use of plastic materials for packaging. The present invention can deal with this requirement in a specific manner.

Some embodiments and/or Examples of the present invention are described in detail above, but a person skilled in the art could easily make various modifications to these illustrative embodiments and/or Examples without substantially departing from the novel teachings and effects of the present invention. Accordingly, those various modifications are encompassed in the scope of the present invention.

The literatures described in this description and the contents of the application on the basis of which the present application claims Paris convention priority are incorporated herein by reference in their entirety.

## Claims

1. A thermal bonding method for a plastic bag, comprising:
heat-sealing a heat sealing material interposed between a pair of heating bodies,
wherein one of the pair of heating bodies has a microscopic linear protrusion having a semi-circular or trapezoidal sectional shape, and
wherein the heated linear protrusion is pressed against a sealant of the heat sealing material to inject the sealant that has been melted at a temperature within a temperature zone for cohesive adhesion in a strip-like shape along a side edge of the linear protrusion so as to form a mold adhesion strip.

2. The thermal bonding method for a plastic bag according to claim 1,
wherein the heat sealing material is a composite material including a surface layer material and the sealant, and
wherein the surface layer material of the composite material is used as a pressure container in the injection.

3. The thermal bonding method for a plastic bag according to claim 1 or 2,
wherein a diameter of the semi-circular shape ranges from 0.5 mm to 3 mm, and
wherein a length of a bottom base of the trapezoidal shape ranges from 0.5 mm to 3 mm.

4. The thermal bonding method for a plastic bag according to any one of claims 1 to 3, further comprising adjusting an injection amount of the melted sealant by changing a dimension of the semi-circular shape or the trapezoidal shape.

5. A method of manufacturing a plastic bag, comprising manufacturing a plastic bag having the mold adhesion strip by using the thermal bonding method for a plastic bag of any one of claims 1 to 4.
